# NEW EUROPEAN PATENT SPECIFICATION

(11) **EP 3 644 713 B2**
(45) Date of publication and mention of the opposition decision: **27.08.2025**
(45) Mention of the grant of the patent: 28.07.2021
(21) Application number: 18746013.4
(22) Date of filing: 14.06.2018
(51) Int. Cl.: A01J 5/007, A01J 5/04, A01J 9/04

(54) **MILKING SYSTEM**
MELKSYSTEM
SYSTÈME DE TRAITE

(30) Priority: 27.06.2017 NL 2019128
(43) Date of publication of application: 06.05.2020
(73) Proprietor: Lely Patent N.V., 3147 PB Maassluis (NL)
(72) Inventor: VAN DE MEERENDONK, Robertus Carolus, 3147 PB Maassluis (NL)
(74) Representative: Octrooibureau Van der Lely N.V.
(86) International application number: PCT/NL2018/050389
(87) International publication number: WO 2019/004818

(56) References cited:
- EP-A2- 0 797 915
- WO-A1-2012/113092
- WO-A1-2015/170974
- WO-A1-97/16962
- ZALL ROBERT R, CHEN JOSEPH: "Heating and storing milk on dairy farms before pasteurization in milk plants", JOURNAL OF DAIRY SCIENCE, vol. 64, 1 January 1981 (1981-01-01), pages 1540 - 1544, XP055922525

## Description

The present invention relates to a milking system, comprising a milking device for milking a milking from a dairy animal during a milking session, and provided with a control unit for controlling the milking system, several milking cups, each ending in a milk hose, a first milk jar for receiving the milking which is connected to the milk hoses and which is provided with a first closable milk outlet, a first milk pipe in flow communication with the milk outlet, a first pumping device which is configured to pump the milking from the first milk jar into the first milk pipe. Such a milking system is described in European patent publication EP0797915.

Such milking devices are also generally known, for example the Lely Astronaut^{®} or DeLaval VMS^{™} milking robots. The milked milk is usually collected in a milk storage tank, where it is kept until the collected milk is picked up by a milk tanker. As required by law, the milk is stored in chilled conditions. Cooling may be effected directly and exclusively in the milk storage tank, but, in order to limit the cooling power of the installation of the milk storage tank, it is also possible to pre-cool milk in a pre-cooler, in which case the heat which has already been recovered therefrom can be used for other purposes, such as pre-heating cleaning water or the like.

In practice, it has been found that such a known milking system has an undesirably low energy efficiency and moreover has a needlessly large heat-exchanging capacity.

It is therefore an object of the present invention to provide a milking system of the type mentioned in the introduction which has improved efficiency and/or a reduced heat-exchanging capacity at the same processing capacity.

This object is achieved by the invention by a milking system as claimed in claim 1.

The invention is based on the understanding that it is difficult to achieve a high efficiency during cooling or heating of the received milk as well as a large capacity of the milking device with only a single milk jar with pumping device. After all, this milk jar will be pumped empty at the end of a milking session as quickly as possible in order to make the milking device available for a subsequent milking. This in turn means that there is a high peak milk flow in the subsequent milk pipe through the heat-exchanging device. The latter then has to have a relatively high heat-exchanging capacity in order to be able to bring a high peak milk flow to the desired temperature as well. However, by pumping the milking from the first milk jar to a second milk jar and from there pumping it into the milk pipe at a lower flow rate, a much more even milk stream will flow through the heat-exchanging system which consequently only requires a relatively low capacity. As pumping from the second milk jar can take place independently from pumping from the first milk jar, the heat-exchanging system can also be optimised for the first-mentioned pumping. This not only has advantages in terms of energy, but also means that the system can be made much more compact and that the milk, due to the lower flow rate, will also be of better quality. Although in this case the first section from the first to the second milk jar will be traveled through at the known, high flow rate, this section will be much shorter than usual, i.e. up to the milk storage tank.

In the present application, the term flow rate is understood to mean the milk volume flow per unit time. Alternatively, a relatively low flow rate may also be described as a relatively long time to pump the respective milk jar empty. Thus, in the present invention, emptying time of the first milk jar will be shorter than the emptying time of the second milk jar.

Further embodiments and advantages are described in the dependent claims and/or in the part of the description following below.

In embodiments, the milking device comprises an animal identification system which is configured to identify the dairy animal to be milked and the control unit comprises a database containing milk information about the dairy animals. In practice, the milk production of dairy animals, in particular of cows, has been found to be relatively constant and thus easily predictable on the basis of the time elapsed since the last milking, the so-called milking interval. If a dairy animal presents itself and is identified, the control unit is able to retrieve information about the dairy animal in the database, such as the time of the last milking and the average milk production per unit time. The control unit is furthermore advantageously configured to calculate the expected milk yield on the basis of these data, such as (milk production per hour x milking interval in hours) or the like. On the basis of this expected milk yield, the control unit can optionally adjust the milking system, for example in particular the heat-exchanging system, as will be explained below in more detail.

In particular, the animal identification device is also or additionally configured to identify each dairy animal which is in a queue or a waiting area near the milking device in order to be milked successively. In this case, a waiting area has been provided near the milking device, in which dairy animals are able to gather and optionally already register via an animal identification device which is either separate or extended thereto. The control unit may in particular be configured to also calculate an expected milk production for the waiting animals and optionally also an expected milking time, for example based on historical data. In this way, the control unit is even better able to predict what the settings on the milking system, in particular the heat-exchanging system, have to be.

In particular, the milking system comprises several milking devices. These milking devices may all be connected to one and the same heat-exchanging system or also each have their own heat-exchanging system. In the former case, the advantage of the invention is often slightly less clear, because the milk stream may then be more steady. But in case all milking devices were to pump their respective first milk jars empty simultaneously, the mitigating effect of the second milk jars and pumping devices would still be considerable.

Advantageously, the milking device comprises a robotic milking device with voluntary visits by the dairy animal. In such a case, the milk yield may vary greatly during the day, because the dairy animals themselves determine when they are to be milked. Thus, the required heat-exchanging capacity will vary greatly as well and the advantage of the invention will become more apparent. Nevertheless, at least a proportion of the advantage of the invention is also achieved with a conventional milking regime, in which animals are driven to one or more milking devices in groups and are subsequently milked. In such a case, the milking cups will often still be attached by hand. With such conventional milking devices, it is possible to pump the obtained milk directly, i.e. without the use of a milk jar and pumping device, to a milk tank. The milk of several such milking devices is then almost immediately mixed in the milk pipe and the present invention is not applicable. However, if the conventional milking device(s) also has (have) a first milk jar, the embodiment according to the present invention in principle offers the same advantages.

In embodiments, the second pumping device has a second flow rate which is automatically adjustable by the control unit. In embodiments, the control unit is configured to adjust the second flow rate as a function of at least one milk-dependent or dairy animal-dependent parameter. In embodiments, the parameter comprises a volume of the received milking and/or an expected time period between an end of the milking of the dairy animal and the end of a subsequent milking session in the milking device. As has already been indicated above, the control unit may be configured to determine, for example, the expected milk yield, i.e. size of a milking by means of the animal identity and the milking interval. On the basis thereof, the second flow rate could, for example, be adjusted, for example because the milk yield is so great that in case of an unmodified flow rate, the pump would still be active at the start of a subsequent milking. Other reasons for increasing or decreasing the flow rate are also conceivable. Obviously, it is also possible to select one fixed standard flow rate which is adequate in all or most cases. In the latter case, the required heat-exchanging capacity is virtually constant and can thus be chosen accordingly. This results in the lowest, and thus most energy-efficient heat-exchanging capacity. Nevertheless, even with a slightly varying flow rate, and thus in principle accordingly varying required heat-exchanging capacity, the associated value which is actually selected for the heat-exchanging system, i.e. the highest value to be expected of the required heat-exchanging capacity, will lead to a more favorable value than is the case in the prior art.

Incidentally, it is possible to adjust the second flow rate in a dynamic manner, for example if a milking is interrupted and subsequently not restarted again, such as by a milking cup being kicked off or dropping off or by the dairy animal panicking. The resulting smaller milking can then still be pumped off at a(n even) lower second flow rate. Also, it may be the case that historical data show that the new dairy animal to be milked requires a relatively long preparation time or rather that no subsequent dairy animal has actually presented itself, that the milking time of the subsequent dairy animal is very long due to a large expected milk yield or that animal is a low-yield animal, etc. In all such cases and more, it may be advantageous if the control unit adjusts the second flow rate to be lower. To this end, the control unit can switch the second flow rate to a fixed lower value or adjust it in several steps or even in a continuously variable way to the determined parameter(s).

In embodiments, the heat-exchanging system has an energy-exchanging capacity which is automatically adjustable by the control unit. In the present application, the term "energy-exchanging capacity" is understood to mean the amount of heat which can be extracted from or supplied to a certain stream of supplied milk of a specific temperature per unit time. Now, the temperature of the milk will vary little in practice. If the flow rate of the milk stream to be cooled or heated varies, the required capacity will also have to vary. Depending on the embodiment of the heat-exchanging system, it is then possible to adjust a setting of said system. For example, with a tube cooler in counterflow, the flow rate of the used cooling or heating liquid can be adjusted in order to be able to absorb or give off the amount of heat to be exchanged per unit time. Optionally, it is alternatively or additionally possible to adjust the temperature of the liquid and/or the length of the circuit. The energy-exchanging capacity is then a function of all such parameters and thus varies with the assumed parameter value(s). The 'capacity' of the heat-exchanging system is in principle the maximum energy-exchanging capacity, i.e. at optimum parameter value(s). However, in this application, it is also possible that the energy-exchanging capacity at the current parameter value(s) is meant.

Often, the temperature of the liquid in the heat-exchanging system will be equal to the desired temperature and the heat-exchanging system only has to ensure that the milk substantially assumes this temperature. But even then, it may sometimes be necessary to adjust the amount of liquid or its flow rate in the heat-exchanging system. According to the present invention, the capacity may in all cases be smaller than in the known milking systems.

In embodiments, said energy-exchanging capacity is adjustable as a function of the received milking and/or the expected milk yield per unit time. In this case, the control unit is configured to adjust the heat-exchanging system, that is at least one parameter thereof, as a function of the received milking, in particular the volume thereof, and/or the expected amount of milk per unit time. In some cases, it is not desirable to adjust the second flow rate, for example because this requires a more complex second pumping device with adjustable flow rate or because maintaining the milk quality by means of a constant low flow rate is more important. In such cases, these embodiments offer a solution in the form of the ability to adjust the energy-exchanging capacity of the heat-exchanging system. For example, if tap water is used for cooling, it may suffice to provide an adjustable valve or tap. If the energy-exchanging capacity of the heat-exchanging system can only be adjusted slowly, it may be advantageous to base the adjustment on historical data. In particular, it is then interesting if the control unit is configured to determine an average profile of the milk yield during the day from the historical data or also to add such a profile to the database, and is configured to adjust the energy-exchanging capacity of the heat-exchanging system on the basis of this profile. In practice, it has been found that dairy animals are creatures of habit which visit the milking device at relatively regular intervals. In connection with the likewise relatively constant milk production, this means that the amount of milked milk per hour will often be a relatively constant function of the time of the day.

In embodiments, the control unit is configured to adjust the energy-exchanging capacity of the heat-exchanging system as a function of the second flow rate set by the control unit and/or to adjust the second flow rate as a function of the set heat-exchanging capacity. With these embodiments, the control unit is in fact configured to match both variables, namely the second flow rate and the energy-exchanging capacity, to each other. In this way, the variability of both systems can be used in an optimum manner, wherein for example the milk quality can readily be ensured by preventing the second flow rate from being excessively high, whereas the energy-exchanging capacity of the heat-exchanging system varies much more slowly, if at all, by actually varying the second flow rate slightly more for compensation.

The milking system furthermore comprises a milk-processing system for processing the milk which has been brought to the desired temperature by the heat-exchanging system. With this feature, the advantage of an optimised heat-exchanging system becomes evident. A heat-exchanging system can, after all, not just be used for cooling purposes, but also for bringing the milk to a temperature which is suitable or optimal for further processing. Thus, it is readily possible to already process milk to form, for example, another sellable product at the dairy farm itself. The required temperatures (or temperature range) often require precision and depend on the desired product.

The milk-processing system comprises at least one of: a pasteurising device, a sterilising device, a homogenising device, a yogurt-making device and a cheese-making device. In this case, the yogurt- and the cheese-making device can be used for making yogurt or cheese, and the homogenising and/or the pasteurising or the sterilising device for processing milk to make many products, such as pasteurised or sterilised milk. In this case, the product designations are general, so that "cheese" also comprises, for example, cream cheese, quark etc. Other products, such as kefir, are also possible. In this case, it is advantageous if the heat-exchanging system is set to enable the milk to reach the desired therein, or at least to come as close as possible. During cooling, as well as with the moderate temperatures for making cheese or yogurt, this is readily possible. During pasteurisation and sterilisation, this is not readily possible, but not necessary either, provided the temperature of the milk increases, so that the latter is able to reach the desired temperature during the real pasteurisation or sterilisation more quickly. After all, this makes it possible to manage the pasteurising and/or sterilising process more efficiently and the capacity required therefore is smaller, which offers advantages with regard to the size and the energy consumption of the respective pasteurising or sterilising device.

The heat-exchanging system is automatically adjustable by the control unit in order to bring the milk of the milking to a temperature which is adjustable by the control unit. With this feature, the temperature to which the milk in the heat-exchanging system is brought is variably adjustable by the control unit, for example depending on the device which is coupled downstream of the heat-exchanging system or, if there are several devices, to which of the devices the milk is passed. To this end, a valve and pipe system which is controllable by the control unit may be provided, which passes the milk from the heat-exchanging system controllably to the milk-processing device set by the control unit.

In embodiments, the milking system furthermore comprises one or more storage tanks, each for storing at least part of the milk from one or more milkings. The storage tanks may be intended for the milk which has passed through the heat-exchanging system and optionally one or more milk-processing devices, such as cooled milk or heated milk, for example pasteurised or sterilised milk. Alternatively or additionally, the storage tanks may also comprise tanks which contain milk for a relatively long reaction or treatment, such as fermentation tanks. The or each storage tank is then a part of a milk-processing device. The milking system then comprises a valve and pipe system which is controllable by the control unit for passing a milking or part of a milking to one of the storage tanks in a targeted manner.

In all of the abovementioned examples of valve and pipe systems, the control unit is in particular configured to control the valves on the basis of at least one dairy animal parameter or milk parameter. For example, if genetically different animals are present in a herd, and it is advantageous to keep the milk from these animals which are recognised in an animal identification device separate. It is also possible for the control unit to control the valves on the basis of a piece of information input by a user. For example, the user wishes to make an amount of yogurt. The control unit will then, after having passed the milk through the heat-exchanging system, pass a required amount of milk in the form of one or more milkings to a tank for yogurt milk or even a fermentation tank. Other destinations are of course also possible.

The invention will now be explained in more detail by means of the drawing, in which a few non-limiting embodiments are shown and described, and in which:
Figure 1 shows a diagrammatic view of a first milking system 1 not according to the invention, and
Figure 2 diagrammatically shows an embodiment of the milking system according to the invention.

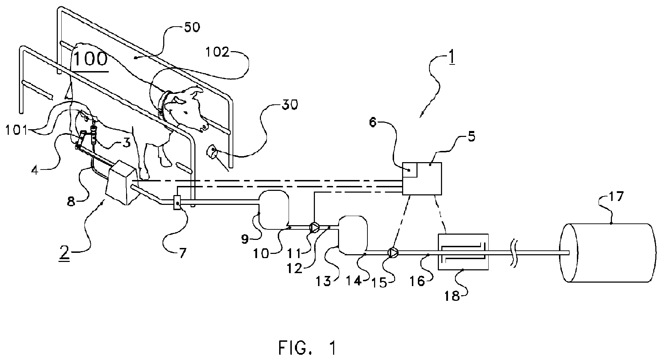

Figure 1 shows a diagrammatic view of a first milking system 1 not according to the invention. The system 1 comprises an automatic robotic milking device 2, milking cups 3, a robot arm 4 and a control unit 5, containing a database 6, and furthermore a milk sensor 7, a milk hose 8, a first milk jar 9 with a first milk outlet 10, a first milk pump 11, a second milk hose 12, a second milk jar 13 with a second milk outlet 14, a second milk pump 15, a milk pipe 16, as well as a milk tank 17. Finally, reference numeral 18 denotes a heat-exchanger.

Furthermore, a milking station 50 containing a dairy animal 100 with teats 101 and an ID tag 102, as well as an animal identification device 30 are shown.

The robotic milking device 2 comprises a robot arm 4 for attaching milking cups 3, only one of which is shown here, to the teats 101 of a dairy animal 100. Here, the robot arm is provided with a gripper for gripping and attaching milking cups 3 one by one, but this may also be an arm which is provided with a holder on which the four milking cups are detachably arranged. However, such details are not important in this case. For control, the robotic milking device is provided with or connected to a control unit 5, containing a database 6 with data about the dairy animals and/or with space for storing data about the dairy animals, such as milk data. In order to correctly couple data in the database 6, an animal identification device 30, such as a tag reader, is provided in order to read an ID tag 102 on the neck of the dairy animal 100. In this case, the dairy animal 100 may voluntarily present itself at the milking station 50 or also due to forced cow traffic, in which case a herd is driven to a milking station, for example twice daily.

The robotic milking device 2, 4 may also be replaced by a conventional milking device, in which case the milking cups 3 are attached by hand by milkers. This is irrelevant to the invention, although the advantages will be more significant in case of irregular, voluntary visits by animals, as is the case with a robot with free cow traffic.

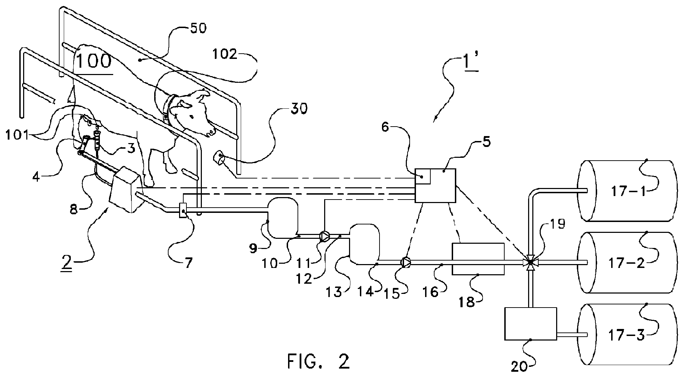

When milking the dairy animal 100, the milk obtained will be collected as a milking in the first milk jar 9 via the milk hose 8. Partly on the basis of the data associated with the dairy animal 100 from the database 6 and/or data which are obtained by the milk sensor 7 during the milking operation, a milk quality can be determined and it is also possible, partly on the basis thereof, to determine what the milk will be used for. Milk which meets the requirements is passed, for example, by the control unit 5 to the bulk tank 17 for milk for consumption, whereas unsuitable milk, such as milk from sick dairy animals, can be passed to another destination (not shown here), such as drains. Of course, it is possible to provide several destinations with a correspondingly adapted valve device. This will be explained in more detail in Figure 2.

In order to vacate the milking device 2, 4 as quickly as possible for a subsequent milking, the milk in the first milk jar 9 will be pumped off by means of the first milk pump 11 via the first milk outlet 10. The available time is in principle no longer than the time required for the dairy animal 100 to leave the milking station 50 and to allow a subsequent dairy animal to position itself and prepare for the milking operation. This is a time in the order of magnitude of 1 minute. With the known milking systems, this milk would then be pumped through the entire milk pipe system to the milk tank at a correspondingly high speed. However, at such high speeds, the milk is subjected to mechanical loads and intimately mixed with air. This is disadvantageous for the milk quality, in particular for the fat globules, since this causes the release of a relatively large amount of free fatty acids, rendering the milk rancid. However, with the present invention the milk from the milking is pumped out of the first milk jar 9 at the same speed, but only over a short distance, namely only for the distance from the short second milk hose 12 to the second milk jar 13. Not only is this distance much shorter than an average distance to the bulk tank in a conventional milking system, which latter distance is often a few tens of meters, but the second milk hose 12 may also be optimised for quick transportation over a short distance. For example, the second milk hose may have a large diameter and also otherwise exhibit little resistance to flow.

Optionally mixed air can then escape again in the second milk jar 13. The milk can then be pumped on much more calmly to the milk tank 17 by means of the second milk pump 15 via the second milk outlet 14 and the milk pipe 16. The reason for this is that the time period for this pumping operation is for example approximately equal to the time period from receiving the milk from the first milk jar to the end of the subsequent milking. This time period is in principle at least equal to the duration of a milking, approximately 6 to 10 minutes, but this time period may be virtually unlimited if no subsequent dairy animal presents itself immediately. The pumping speed of the milk through the second milk pump 15 can therefore be selected to be much lower, which may have a beneficial effect on the milk quality. In addition, the control unit 5 may be configured to control this pumping speed dynamically, for example on the basis of the expected waiting time. The expected waiting time may in turn be determined by the control unit by means of the time at which a subsequent dairy animal is identified and/or when a milking of the subsequent dairy animal starts and/or the expected milk yield of the subsequent dairy animal and on the basis thereof the expected duration of the milking, etc.

According to the present invention, the milk passes a heat exchanger 18 in order to bring the milk to a desired temperature. In a simple example, such as that illustrated in Figure 1, this is a pre-cooler prior to the milk entering the milk tank 17. As a result thereof, the new milk entering the milk tank will only have a reduced heating effect, if at all, on the milk which is already present in the tank 17. In addition, it may be better for the milk quality if this is cooled to a lower temperature as quickly as possible, so that any bacteria or the like are not able to multiply in the milk as quickly during the transportation to the milk tank 17 and that fat globules in the milk are damaged less easily.

It is advantageous if the heat exchanger 18 is not overly large and also does not consume energy unnecessarily by using too much cooling medium or pumping it too quickly or circulating it unnecessarily, for example if no milk arrives for some time. To this end, the heat exchanger 18 is advantageously controllably connected to the control unit 5. The control unit can then advantageously reduce the heat-exchanging capacity of heat exchanger 18 if no or less milk arrives. Additionally or alternatively, the control unit can control the second milk pump 15 to increase or decrease the second flow rate. For example if no subsequent dairy animal has presented itself (yet) in the milking station 50, it may be sensible for the control unit 5 to control the second milk pump 15 to run at a lower flow rate, so that the milk of the milking is transported at an even lower speed. This is advantageous in order to retain the fat globules in the milk and to prevent air from unnecessarily being mixed in with the milk. In addition, the control unit may optionally control the heat exchanger 18 to run at a lower capacity, which may be advantageous energetically.

The control unit 5 can control the second milk pump 15 and/or the heat exchanger 18 in numerous ways. Thus, after a dairy animal 100 has presented itself and been identified, the control unit 5 may use historical data in the database 6 in order to retrieve the associated data, such as the time of the previous milking, suitability for consumption of the milk and average milk yield or milk production per hour. The control unit is then configured to, based on these data, either maintain the values set for the second flow rate of the second milk pump 15 and the heat-exchanging capacity of the heat exchanger 18 or to change the setting for one or both components, such as a lower second flow rate or a different heat-exchanging capacity. In all cases, it is an object of the milking system as a whole to pump the milk in a softer, slower way without any or only a very slight loss of milking capacity and/or to bring it to the desired temperature in a more energy-efficient way.

It should be noted that it is advantageous to provide a three-way valve with an outlet to a drain or the like between the first milk jar 9 and the second milk jar 13. After all, it makes no sense to bring milk which will subsequently not be passed to the tank 17 for milk for consumption to a specific temperature or to treat such milk with care.

Figure 2 diagrammatically shows an embodiment of the milking system according to the invention, here denoted overall by reference numeral 1'. In the drawing, similar parts are denoted by the same reference numerals, optionally provided with one or more accents and/or indications such as "-1"etc.

In addition to or instead of the corresponding parts which have already been shown in Figure 1, the milking system 1' comprises, downstream of the heat exchanger 18, a valve system 19 with connecting lines to a first milk tank 17-1, a second milk tank 17-2 and a milk-processing device 20 which in turn is coupled to a milk tank 17-3.

The milk of the dairy animal 100 is again collected in the first milk jar 9. The control unit 5 may decide what to do with the milk on the basis of historical data and/or of data about the milk which have been collected by sensor device 7 during the milking and been sent to the control unit 5.

Should the occasion arise where the milk is unsuitable for human consumption, such as antibiotic milk or mastitis milk, then this may be discharged, for example, into a drain (not shown) or, for example, into a first milk tank 17-1 provided for the purpose, for example a calves milk tank. The control unit 5 can then operate the valve device 19, in this case a four-way valve, but obviously also configurable differently, accordingly. If the milk is stored, the control unit 5 may be configured to not switch on the heat exchanger 18, so that the milk is not cooled or heated, which is often not necessary for calves milk which is used again quickly. Since, according to the invention, the heat exchanger may be of a small and compact design, due to the low required heat-exchanging capacity, it may make sense to also take this measure for a small amount of milk. After all, the heat exchanger 18 is then able to quickly adjust its temperature as well.

If the milk is suitable for human consumption, the milking system 1' may, for example, also make a distinction regarding the milk quality, for example using the fat percentage or the presence of a particular substance due to the genetic state of the dairy animal 100. All this may, for example, be determined by means of the values of sensor 7 or the animal identity, as determined by means of ID tag 102 which is read out by the tag reader 30. For example, the control unit 5 may send the milk to milk tank 17-2. To this end, the milk may be, for example, pre-cooled in the heat exchanger 18. The desired temperature is, for example, 10 to 15°C, so that the step to between 2 and 4°C in the tank 17-2 is significantly smaller. A temperature of 15 °C may be reached, for example, by heat exchange with tap water or groundwater. It should be noted that it is also possible to choose the desired temperature downstream of the heat exchanger 18 to be much lower, such as 2-4°C. This may be advantageous if the tank 17-2 is still virtually empty. After all, the cooling power of the cooling element in the milk tank 17-2 is often quite considerable and the cooling element may, upon contact with a small portion of milk, such as a milking, freeze the milk, which is undesirable. By now allowing the much smaller heat exchanger 18 to cool the first milking, or at least a predetermined first amount of milk from one or more milkings, to 2-4°C, the risk of freezing can be prevented efficiently, as the heat exchanger is much smaller and can be controlled more reliably. In this case, it is obviously necessary for the heat exchanger 18 to be configured such that this temperature of 2-4°C can also be reached, such as by means of an added ice water tank, compressor cooling or the like.

Alternatively, it is also possible to store the milk at a higher temperature, for example for the purpose of a subsequent processing step. Although there are rules in place for the timely cooling of milk, this may nevertheless be permissible if the milk is processed further sufficiently quickly. According to the invention, milk from dairy animals having a very low cell count and/or germ count may, for example, be selected in order to be processed to (farmhouse) cheese. The cell count and/or germ count may be determined from historical data, i.e. via database 6, or by means of a sensor 7 which is suitable for the purpose and known per se. The respective milk does then not have to be cooled to the low temperature immediately, although this is of course possible. Again, the required small heat exchanger 18 offers the possibility of changing the desired temperature (more) quickly. Incidentally, it is not necessary to set the desired temperature per dairy animal, because then some of the advantageous energy effect would be lost again. However, it is certainly possible to designate, for example, a desired amount of milk for a product, such as cheese or also yogurt, semi-skimmed milk, optionally sterilised etc. and for the control unit 5 to set a certain desired temperature of the heat exchanger 18 for this purpose.

Alternatively, the control unit 5 may also send milk from one or more milkings to a milk-processing device 20, which is only indicated in a highly diagrammatic manner here. The device 20 is, for example, a fermentation tank or a pasteurising and/or sterilising and/or homogenising and/or standardising device. It is possible that, for an optimum process profile in the milk-processing device 20, a different temperature than for example 10-15 or 2-4°C for only cooling and storing may be more suitable. A clear example is direct pasteurisation or sterilisation, where cooling milk first does not make sense. The control unit 5 is then able to adjust the desired temperature in the heat exchanger 18 accordingly.

As has already been indicated above, the desired temperature may in principle be set for each milking. Often, it is energetically more advantageous to treat, a, for example predetermined, amount of milk from several milkings in the same way and thus also to bring them to the same desired temperature. For example, a farmhouse shop provided with a milking system 1' could choose to produce yogurt when the amount of yogurt in stock drops below a threshold value. The same applies to other dairy products, such as semi-skimmed milk, kefir etc. Obviously, with cheese there is a delay time due to the maturing process, but stock management also plays a role in this case and a production batch will have to be run from time to time. In all such cases, the control unit 5 can set an associated desired temperature in the heat exchanger 18.

Obviously, other configurations are also possible which make use of the inventive idea of pumping milk in a more steady manner, thus enabling the use of a relatively small, more flexible heat exchanger. In this way, it is possible to save energy without loss of capacity and with improved milk quality.

## Claims

1. A milking system (1), comprising a milking device (2) for milking a milking from a dairy animal (100) during a milking session, and provided with:
- a control unit (5) for controlling the milking system,
- several milking cups (3), each ending in a milk hose (8),
- a first milk jar (9) for receiving the milking which is connected to the milk hoses and which is provided with a first closable milk outlet (10),
- a first milk pipe (12) in flow communication with the milk outlet,
- a first pumping device (11) which is configured to pump the milking from the first milk jar into the first milk pipe,
- a second milk jar (13) in flow communication with the first milk pipe for receiving the milking from the first milk jar therefrom, and which is provided with a second milk outlet (14),
- a second milk pipe (16) in flow communication with the second milk outlet,
- a second pumping device (15) which is configured to pump at least some of the milking, in particular the entire milking, from the second milk jar into the second milk pipe, **characterized in that** the first pumping device is configured to pump the milking at a first flow rate, and the second pumping device is configured to pump the milking at a second flow rate which is lower than the first flow rate,
furthermore comprising a heat-exchanging system (18) which is in flow communication with the second milk pipe and is configured to receive the milking pumped in the second milk pipe and to bring the received milking to a desired temperature,
furthermore comprising a milk-processing system (20) for processing the milk which has been brought to the desired temperature by the heat-exchanging system, wherein the milk-processing system comprises at least one of: a pasteurising device, a sterilising device, a homogenising device, a yogurt-making device, and a cheese-making device,
wherein the heat-exchanging system is automatically adjustable by the control unit in order to bring the milk of the milking to a temperature which is adjustable by the control unit.

2. The milking system as claimed in claim 1, wherein the milking device comprises an animal identification system (30) which is configured to identify the dairy animal to be milked, in particular also or additionally to identify each dairy animal which is in a queue or a waiting area near the milking device in order to be milked successively, and wherein the control unit comprises a database containing milk information about the dairy animals.

3. The milking system as claimed in one of the preceding claims, wherein the second pumping device has a second flow rate which is automatically adjustable by the control unit.

4. The milking system as claimed in claim 3, wherein the control unit is configured to adjust the second flow rate as a function of at least one milk-dependent or dairy animal-dependent parameter.

5. The milking system as claimed in claim 4, wherein the parameter comprises a volume of the received milking and/or an expected time period between an end of the milking of the dairy animal and the end of a subsequent milking session in the milking device.

6. The milking system as claimed in one of the preceding claims, wherein the heat-exchanging system has an energy-exchanging capacity, which is automatically adjustable by the control unit.

7. The milking system as claimed in claim 6, wherein said energy-exchanging capacity is adjustable as a function of the received milking and/or the expected milk yield per unit time.

8. The milking system as claimed in one of the preceding claims, as a function of claim 3 and 6, wherein the control unit is configured to adjust the energy-exchanging capacity of the heat-exchanging system as a function of the second flow rate set by the control unit and/or to adjust the second flow rate as a function of the set heat-exchanging capacity.

9. The milking system as claimed in one of the preceding claims, furthermore comprising one or more storage tanks (17), each for storing at least part of the milk from one or more milkings.

## Patentansprüche

1. Melksystem (1), umfassend eine Melkvorrichtung (2) zum Melken von einer Milchung von einem Milchtier (100) während einer Melksitzung, und versehen mit:
- einer Steuereinheit (5) zum Steuern des Melksystems,
- mehreren Melkbechern (3), jeder in einem Milchschlauch (8) endend,
- einer ersten Milchkanne (9) zum Aufnehmen der Milchung, die mit den Milchschläuchen verbunden ist und die mit einem ersten schließbaren Milchauslass (10) versehen ist,
- einem ersten Milchrohr (12) in Fluidverbindung mit dem Milchauslass,
- einer ersten Pumpvorrichtung (11), die ausgelegt ist zum Pumpen der Milchung aus der ersten Milchkanne in das erste Milchrohr,
- einer zweiten Milchkanne (13) in Fluidverbindung mit dem ersten Milchrohr zum Aufnehmen der Milchung aus der ersten Milchkanne davon, und die mit einem zweiten Milchauslass (14) versehen ist,
- einem zweiten Milchrohr (16) in Fluidverbindung mit dem zweiten Milchauslass,
- einer zweiten Pumpvorrichtung (15), die ausgelegt ist zum Pumpen von zumindest etwas der Milchung, insbesondere der gesamten Milchung, aus der zweiten Milchkanne in das zweite Milchrohr,
**dadurch gekennzeichnet, dass**
die erste Pumpvorrichtung ausgelegt ist zum Pumpen der Milchung bei einer ersten Durchflussrate und die zweite Pumpvorrichtung ausgelegt ist zum Pumpen der Milchung bei einer zweiten Durchflussrate, die niedriger als die erste Durchflussrate ist,
ferner umfassend ein Wärmetauschsystem (18), das in Fluidverbindung mit dem zweiten Milchrohr ist und dazu ausgelegt ist, die gepumpte Milchung im zweiten Milchrohr aufzunehmen und die aufgenommene Milchung auf eine gewünschte Temperatur zu bringen,
ferner umfassend ein Milchverarbeitungssystem (20) zum Verarbeiten der Milch, die durch das Wärmetauschsystem auf die gewünschte Temperatur gebracht wurde, wobei das Milchverarbeitungssystem zumindest eine aus Folgenden umfasst: eine Pasteurisierungsvorrichtung, eine Sterilisierungsvorrichtung, eine Homogenisierungsvorrichtung, eine Joghurtherstellungsvorrichtung und eine Käseherstellungsvorrichtung,
wobei das Wärmetauschsystem durch die Steuereinheit automatisch einstellbar ist, um die Milch der Milchung auf eine Temperatur zu bringen, die durch die Steuereinheit einstellbar ist.

2. Melksystem nach Anspruch 1, wobei die Melkvorrichtung ein Tieridentifikationssystem (30) umfasst, das ausgelegt ist zum Identifizieren des zu melkenden Milchtiers, insbesondere auch oder zusätzlich zum Identifizieren jedes Milchtiers, das in einer Warteschlange oder einem Wartebereich nahe der Melkvorrichtung ist, um nacheinander gemolken zu werden, und wobei die Steuereinheit eine Datenbank umfasst, die Melkinformationen über die Milchtiere enthält.

3. Melksystem nach einem der vorhergehenden Ansprüche, wobei die zweite Pumpvorrichtung eine zweite Durchflussrate aufweist, die durch die Steuereinheit automatisch einstellbar ist.

4. Melksystem nach Anspruch 3, wobei die Steuereinheit ausgelegt ist zum Einstellen der zweiten Durchflussrate als eine Funktion von zumindest einem von der Milch abhängigen oder vom Milchtier abhängigen Parameter.

5. Melksystem nach Anspruch 4, wobei der Parameter ein Volumen der aufgenommenen Milchung und/oder eine erwartete Zeitspanne zwischen einem Ende des Melkens des Milchtiers und dem Ende einer anschließenden Melksitzung in der Melkvorrichtung umfasst.

6. Melksystem nach einem der vorhergehenden Ansprüche, wobei das Wärmetauschsystem eine Energieaustauschfähigkeit aufweist, die durch die Steuereinheit automatisch einstellbar ist.

7. Melksystem nach Anspruch 6, wobei die Energieaustauschfähigkeit als eine Funktion der aufgenommenen Milchung und/oder des erwarteten Milchertrags pro Einheitszeit einstellbar ist.

8. Melksystem nach einem der vorhergehenden Ansprüche, als eine Funktion von Anspruch 3 und 6, wobei die Steuereinheit ausgelegt ist zum Einstellen der Energieaustauschfähigkeit des Wärmetauschsystems als eine Funktion der zweiten Durchflussrate, festgelegt durch die Steuereinheit, und/oder zum Einstellen der zweiten Durchflussrate als eine Funktion der festgelegten Wärmetauschfähigkeit.

9. Melksystem nach einem der vorhergehenden Ansprüche, ferner umfassend einen oder mehrere Speichertanks (17), jeweils zum Speichern zumindest eines Teils der Milch aus einem oder mehreren Milchungen.

## Revendications

1. Système de traite (1), comprenant un dispositif de traite (2) pour traire le lait d'un animal laitier (100) pendant une séance de traite, et doté de :
- une unité de commande (5) pour commander le système de traite,
- plusieurs gobelets de traite (3), chacun finissant dans un tuyau à lait (8),
- un premier récipient à lait (9) pour recevoir le lait trait qui est raccordé aux tuyaux à lait et qui est doté d'un premier orifice de sortie de lait refermable (10),
- un premier tuyau à lait (12) en communication fluidique avec l'orifice de sortie de lait,
- un premier dispositif de pompage (11) qui est configuré pour pomper le lait trait depuis le premier récipient à lait vers le premier tuyau à lait,
- un second récipient à lait (13) en communication fluidique avec le premier tuyau à lait pour recevoir le lait trait depuis le premier récipient à lait en provenance de celui-ci, et qui est doté d'un second orifice de sortie de lait (14),
- un second tuyau à lait (16) en communication fluidique avec le second orifice de sortie de lait,
- un second dispositif de pompage (15) qui est configuré pour pomper au moins une partie du lait trait, en particulier tout le lait trait, depuis le second récipient à lait vers le second tuyau à lait,
**caractérisé en ce que** le premier dispositif de pompage est configuré pour pomper le lait trait à un premier débit, et le second dispositif de pompage est configuré pour pomper le lait trait à un second débit qui est inférieur au premier débit,
comprenant en outre un système d'échange de chaleur (18) qui est en communication fluidique avec le second tuyau à lait et est configuré pour recevoir le lait trait pompé dans le second tuyau à lait et pour amener le lait trait reçu à une température souhaitée, comprenant en outre un système de traitement de lait (20) pour traiter le lait qui a été amené à la température souhaitée par le système d'échange de chaleur, dans lequel le système de traitement de lait comprend au moins un parmi : un dispositif de pasteurisation, un dispositif de stérilisation, un dispositif d'homogénéisation, un dispositif de fabrication de yaourts et un dispositif de fabrication de fromages,
dans lequel le système d'échange de chaleur est automatiquement ajustable par l'unité de commande dans le but d'amener le lait de la traite à une température qui est ajustable par l'unité de commande.

2. Système de traite selon la revendication 1, dans lequel le dispositif de traite comprend un système d'identification d'animaux (30) qui est configuré pour identifier l'animal laitier à traire, en particulier également ou en outre pour identifier chaque animal laitier qui est dans une file d'attente ou une zone d'attente près du dispositif de traite dans le but d'être trait successivement, et dans lequel l'unité de commande comprend une base de données contenant des informations laitières relatives aux animaux laitiers.

3. Système de traite selon l'une quelconque des revendications précédentes, dans lequel le second dispositif de pompage a un second débit qui est automatiquement ajustable par l'unité de commande.

4. Système de traite selon la revendication 3, dans lequel l'unité de commande est configurée pour ajuster le second débit en fonction d'au moins un paramètre dépendant du lait ou dépendant de l'animal laitier.

5. Système de traite selon la revendication 4, dans lequel le paramètre comprend un volume du lait trait reçu et/ou une période temporelle attendue entre une fin de la traite de l'animal laitier et la fin d'une séance de traite ultérieure dans le dispositif de traite.

6. Système de traite selon l'une quelconque des revendications précédentes, dans lequel le système d'échange de chaleur a une capacité d'échange énergétique, qui est automatiquement ajustable par l'unité de commande.

7. Système de traite selon la revendication 6, dans lequel ladite capacité d'échange énergétique est ajustable en fonction du lait trait reçu et/ou du rendement laitier attendu par unité de temps.

8. Système de traite selon l'une quelconque des revendications précédentes, en fonction des revendications 3 et 6, dans lequel l'unité de commande est configurée pour ajuster la capacité d'échange énergétique du système d'échange de chaleur en fonction du second débit défini par l'unité de commande et/ou pour ajuster le second débit en fonction de la capacité d'échange de chaleur définie.

9. Système de traite selon l'une quelconque des revendications précédentes, comprenant en outre une ou plusieurs cuves de stockage (17), chacune destinée à stocker au moins une partie du lait provenant de la ou des traites.
